Europäisches Patentamt

European Patent Office

Office européen des brevets

(19)

(11) Publication number : **0 492 897 A2**

# EUROPEAN PATENT APPLICATION

(12)

(21) Application number : **91311516.8**

(22) Date of filing : **11.12.91**

(51) Int. Cl.⁵ : **G06F 15/62**

(30) Priority : **21.12.90 US 631818**

(43) Date of publication of application :
**01.07.92 Bulletin 92/27**

(84) Designated Contracting States :
**DE FR GB NL**

(71) Applicant : **GENERAL ELECTRIC COMPANY**
**1 River Road**
**Schenectady, NY 12345 (US)**

(72) Inventor : **Tam, Kwok Cheong**
**1250 Hempstead Road**
**Schenectady, New York 12309 (US)**

(74) Representative : **Pratt, Richard Wilson et al**
**London Patent Operation G.E. Technical**
**Services Co. Inc. Essex House 12/13 Essex**
**Street**
**London WC2R 3AA (GB)**

(54) **Reconstructing a 3-D image.**

(57)    A methods and apparatus is disclosed for 3D
CT image reconstruction involving a conven-
tional 2D CT reconstruction. A 3D image of the
object is reconstructed slice-by-slice by employing, for each slice, a 2D reconstruction
procedure, for example, filtered backprojection,
on the values of the 2D projection images in the
plane of the slice to calculate a 2D image of the
object for each of the slices.

FIG. 9

EP 0 492 897 A2

Jouve, 18, rue Saint-Denis, 75001 PARIS

Cross-Reference to Related Applications

The invention disclosed and claimed herein is related to the subject matter of the co-filed patent applications, the entire disclosures of which are hereby expressly incorporated herein by reference and which are based on:

U.S. Serial No. 07/631,815, filed 21 Dec. 1990, concurrently herewith, by Kwok C. Tam, entitled "METHOD AND APPARATUS FOR CONVERTING CONE BEAM X-RAY PROJECTION DATA TO PLANAR INTEGRALS AND RECONSTRUCTING A THREE-DIMIENSIONAL COMPUTERIZED TOMOGRAPHY (CT) IMAGE OF AN OBJECT" [RD-20039]; and

U.S. Serial No. 07/631,514, filed 21 Dec. 1990, concurrently herewith, by Kwok C. Tam, entitled "METHOD AND APPARATUS FOR RECONSTRUCTING A THREE-DIMENSIONAL COMPUTERIZED TOMOGRAPHY (CT) IMAGE OF AN OBJECT FROM INCOMPLETE CONE BEAM PROJECTION DATA" [RD-19695].

Background of the Invention

The present invention relates generally to three-dimensional (3D) computerized tomography (CT) and, more particularly, to methods and apparatus employing parallel processing for reconstructing a 3D image of an object from cone beam projection data through inverse Radon transformation.

In conventional computerized tomography for both medical and industrial applications, an x-ray fan beam and a linear array detector are employed. Two-dimensional (2D) imaging is achieved. While the data set is complete and image quality is correspondingly high, only a single slice of an object is imaged at a time. When a 3D image is required, a "stack of slices" approach is employed. Acquiring a 3D data set a 2D slice at a time is inherently tedious and time-consuming. Moreover, in medical applications, motion artifacts occur because adjacent slices are not imaged simultaneously. Also, dose utilization is less than optimal, because the distance between slices is typically less than the x-ray collimator aperture, resulting in double exposure to many parts of the body.

A more recent approach, based on what is called cone beam geometry, employs a two-dimensional array detector instead of a linear array detector, and a cone beam x-ray source instead of a fan beam x-ray source. At any instant the entire object is irradiated by a cone beam x-ray source, and therefore cone beam scanning is much faster than slice-by-slice scanning using a fan beam or a parallel beam. Also, since each "point" in the object is viewed by the x-rays in 3D rather than in 2D, much higher contrast can be achieved than is possible with conventional 2D x-ray CT. To acquire cone beam projection data, an object is scanned, preferably over a 360° angular range, either by moving the x-ray source in an appropriate scanning trajectory, for example, a circular trajectory around the object, while keeping the 2D array detector fixed with reference to the source, or by rotating the object while the source and detector remain stationary. In either case, it is relative movement between the source and object which effects scanning.

However, image reconstruction becomes complicated and requires massive computational power when a 3D image is reconstructed from cone beam projection data, in contrast to reconstruction of 2D image from fan beam projection data. Thus, it is well known that the number of computations in 2D CT image reconstruction is of the order $N^3$. Therefore the 2D image reconstructions on $N$ planes, either vertical or horizontal, for a "stack of slices" approach requires a number of computations of the order of $N \times N^3 = N^4$. In contrast, the number of computations required for a conventional 3D Radon inversion, described briefly below, is of the order of $N^5$.

Thus, in a broad sense, most image reconstruction procedures in x-ray CT are based on the Radon inversion process, in which the image of an object is reconstructed from the totality of the Radon transform of the object. The Radon transform of 2D object consists of integrals of the object density on lines intersecting the object. The Radon transform of a 3D object consists of planar integrals. The cone beam data, however, are not directly compatible with image reconstruction through inverse Radon transformation, which requires the use of planar integrals of the object as input. Consequently, image reconstruction by inversion from cone beam scanning data generally comprises two steps: (1) convert the cone beam data to planar integrals, and (2) perform an inverse Radon transform on the planar integrals to obtain the image. The present invention is primarily directed to fast methods and apparatus involving parallel processing to perform an inverse Radon transform of planar integrals to reconstruct an image of a scanned object.

More specifically, prior art approaches to 3D image reconstruction from cone beam projection data can be roughly divided into two categories.

The first category may be viewed as a variation on the "stack of slices" approach. One example is the system described in Richard A. Robb, Arnold H. Lent, Barry K. Gilbert, and Aloysius Chu, "The Dynamic Spatial Reconstructor", J. Med. Syst., Vol. 4, No. 2, pp. 253-288 (1980). The Dynamic Spatial Reconstructor employs twenty-eight x-ray sources and twenty-eight x-ray imaging systems in a synchronous scanning system to acquire data all at one time for a subsequent "stack of slices" reconstruction using conventional 2D reconstruction algorithms. Thus, the cone beam data are treated as if they are made up of fan beam data on a number of horizontal planes. This method, however, yields the correct images only for the midplane of each x-ray source. The results on the other planes are approximate; the further away from each midplane, the worse the approximation. It may also be noted that Robb et al. refer to the use of "high-speed parallel processing techniques" for the reconstruction computation. In L.A. Feldkamp, L.C. Davis, and J.W. Kress, "Practical Cone-Beam Algorithm", J. Opt. Soc. Am.A., Vol. 1, No. 6, pp. 612-619 (June 1984); and in S. Webb, J. Sutcliffe, L. Burkinshaw, and A. Horsman, "Tomographic Reconstruction from Experimentally Obtained Cone-Beam Projections", IEEE Trans. Med. Imag., Vol. MI-6, p. 67 (1987) approaches are disclosed which attempt to improve on the approximation by doing the reconstruction on oblique slices instead of on horizontal slices.

The second category may be viewed as true 3D image reconstruction. True 3D image reconstruction may be done iteratively, as in the Algebra Reconstruction Technique (ART), or by inversion, which may be viewed as direct calculation.

For example, the Algebra Reconstruction Technique for reconstructing an image of an object from its projections is an iterative process which uses raysums to correct each voxel (volume element) of the reconstructed image at each iteration. The ART was initially disclosed in Richard Gordon, Robert Bender and Gabor T. Herman, "Algebraic Reconstruction Techniques (ART) for Three-dimensional Electron Microscopy and X-ray Photography", J. Theor. Biol., 29, pp. 471-481 (1970). Extension of the additive ART to 3D cone beam geometry is described in M. Schlindwein, "Iterative Three-Dimensional Reconstruction from Twin-Cone Beam Projections", IEEE Trans. Nucl. Sci., Vol. NS-25, No. 5, pp. 1135-1143 (October 1978). In general, the Algebra Reconstruction Technique has the disadvantage of requiring a large amount of computation time.

Examples of various inversion or direct calculation approaches are disclosed in the following: Gerald N. Minerbo, "Convolutional Reconstruction from Cone-Beam Projection Data", IEEE Trans. Nucl. Sci., Vol. NS-26, No. 2, pp. 2682-2684 (April 1979); Heang K. Tuy, "An Inversion Formula for Cone-Beam Reconstruction", SIAM J. Math., Vol. 43, No. 3, pp. 546-552 (June 1983) and Bruce D. Smith, "Image Reconstruction from Cone-Beam Projections: Necessary and Sufficient Conditions and Reconstruction Methods", IEEE Trans. Med. Imag., Vol. MI-44, pp. 1425 (March 1985). In the inversion approach, the object is reconstructed by inverting the cone beam data in a sequence of complicated steps. Among other things, the steps can include: (1) computing a three-dimensional field at each x-ray source location, (2) computing the three-dimensional Fourier transform of the three-dimensional field; (3) numerical differentiation, and (4) three-dimensional backprojection. These steps are not easy to carry out in an accurate manner, and also are very time consuming.

Summary of the Invention

Accordingly, it is an object of the invention to provide efficient methods and apparatus for reconstructing 3D images from cone beam projection data, and from planar integrals.

It is another object of the invention to provide methods and apparatus which employ a parallel processing architecture for fast reconstruction of 3D images using a number of small processors.

It is another object of the invention to provide methods and apparatus of 3D image reconstruction which provide an exact, not approximate, reconstruction, and yet involve a reduced number of computations.

It is yet another object of the invention to provide methods and apparatus for 3D image reconstruction which include the capability of data reduction such that regions of 3D image can be selectively processed or discarded, thereby eliminating the processing of unnecessary data.

It is a related object of the invention to provide methods and apparatus for flaw detection in industrial objects whereby regions of interest can efficiently be identified prior to selective processing of data to reconstruct the corresponding 3D image region.

Briefly stated, and in accordance with an overall aspect of the invention, a method for reconstructing a 3D image of an object from cone beam projection data comprises a preliminary step of determining, from the cone beam projection data, planar integrals on a plurality of planes containing a reference axis in Radon space, for example, a plurality of vertical planes, each containing a vertical axis. The method includes two additional steps, each involving a conventional 2D CT reconstruction procedure operating on the planar integrals organized in the plurality of planes to produce a 3D image of the object. Very briefly, Step 1 comprises 2D CT image reconstructions on a number of vertical planes each containing the vertical axis. Step 2 comprises 2D CT image reconstructions on a number of horizontal planes.

In accordance with another overall aspect of the invention, applicable where planar integrals are already available as determined from detected signals resulting from an imaging agent, such as in the case of nuclear magnetic resonance (MRI) imaging, the planar integrals are organized in a plurality of planes containing a reference axis, for example, as a plurality of vertical planes containing the vertical axis. The two steps referred to above are employed, each involving a 2D CT reconstruction procedure such as conventional filtered backprojection, to reconstruct a 3D image of the object.

In the case of cone beam projection data, a data set $p(s,\hat{a})$, which represents planar integrals of the object $f(x,y,z)$ on planes perpendicular to the direction $\hat{a}$ and at a distance s from the origin can be obtained by integrating the detector readings over straight lines on the detector plane. Such a procedure is described in Minerbo (1979), above. Preferably, however, the approach disclosed in the above incorporated application Serial No. [RD-20039] is employed for this preliminary step.

In accordance with a more particular aspect of the invention, a method for reconstructing a 3D image of an object from cone beam projection data includes the initial step of determining planar integrals on a plurality of planes containing a reference axis in Radon space from the cone beam projection data, for example, a plurality of vertical planes containing a vertical axis in Radon space.

As a first subsequent step (Step 1), on each of the planes containing the reference axis, a 2D CT reconstruction procedure, such as filtered backprojection, is employed to calculate a 2D projection image of the object on the particular plane. Preferably, the method includes employing a plurality of 2D CT reconstruction processors operating in parallel, such as filtered backprojection processors, to calculate the 2D projection images of the object, with each of the 2D CT reconstruction processors operating on a subset of the total number of planes.

As a second subsequent step (Step 2), slices are defined in planes perpendicular to the reference axis, for example, horizontal slices perpendicular to the vertical axis, and a 3D image of the object is reconstructed slice-by-slice by employing, for each slice, a 2D reconstruction procedure, for example, filtered backprojection, on the values of the 2D projection images in the plane of the slice to calculate a 2D image of the object for each of the slices. Preferably, the method also includes employing a plurality of 2D CT reconstruction processors, such as filtered backprojection processors, operating in parallel to calculate the 2D images of the object for each of the slices.

In accordance with another aspect of the invention, a method for reconstructing a 3D image of an object from planar integrals determined from detected signals resulting from an imaging agent, such as from MRI imaging, includes the initial step of organizing the planar integrals in a plurality of planes in Radon space, each plane containing a reference axis, such as the vertical axis.

Again, as first subsequent step (Step 1), on each of the planes containing the reference axis, a 2D CT reconstruction procedure, such as filtered backprojection, is employed to calculate a 2D projection image of the object on the particular plane. Preferably, the method includes employing a plurality of 2D CT reconstruction processors operating in parallel, such as filtered backprojection processors, to calculate the 2D projection images of the object, with each of the 2D CT reconstruction processors operating on a subset of the total number of planes.

Again, as second subsequent step (Step 2), slices are defined in planes perpendicular to the reference axis, for example, horizontal slices perpendicular to the vertical axis, and a 3D image of the object is reconstructed slice-by-slice by employing, for each slice, a 2D reconstruction procedure, for example, filtered backprojection, on the values of the 2D projection images in the plane of the slice to calculate a 2D image of the object for each of the slices. Preferably, the method also includes employing a plurality of 2D CT reconstruction processors, such as filtered backprojection processors, operating in parallel to calculate the 2D images of the object for each of the slices.

In accordance with another aspect of the invention, an efficient method for flaw detection and imaging of a portion of an object, particularly an industrial part, from cone beam projection data is provided. In accordance with the aspect of the invention, planar integrals on a plurality of planes containing a reference axis in Radon space, such as a vertical axis, are determined from the cone beam projection data. On each of the planes containing the reference axis, a 2D CT reconstruction procedure is employed to calculate a 2D projection image of the object on the particular plane. Preferably, a plurality of 2D CT reconstruction processors, for example, filtered backprojection processors, operating in parallel are employed to calculate the 2D projection images of the object, with each of the 2D CT reconstruction processors operating on a subset of the total number of planes.

Next, a subset, for example, from two to five of the 2D projection images are selected, and conventional image processing is performed on this subset to identify and locate any regions of interest, such as the presence of flaws, cracks, voids, or the like.

Finally, slices are defined in planes perpendicular to the reference axis and, for each slice spanning any identified regions of interest, a 2D reconstruction procedure is employed on the values of the 2D projection images in the plane of the slice.Preferably, a plurality of 2D CT reconstruction processors, such as filtered backprojection processors, operating in parallel are employed to calculate the 2D images of the object for each of the selected slices.

In accordance with another aspect, the invention provides parallel processing apparatus for reconstructing a 3D image of an object from cone beam projection data. The apparatus includes plurality of 2D CT reconstruction processors, such as conventional filtered backprojection processors. The apparatus also includes means, such as a digital computer, for computing planar integrals on a plurality of planes containing a reference axis in Radon space, for example, a vertical axis, from the cone beam projection data. Also included are means for distributing the planar integrals on the plurality of planes among the 2D CT reconstruction processors such that the 2D CT reconstruction processors calculate a 2D projection image of the object on each of the planes. Each of the 2D CT reconstruction processors accordingly operates on a subset of the total number of planes. The means for distributing may comprise elements of the same digital computer which computes the planar integrals.

The apparatus additionally includes means for organizing the 2D projection images on each of the planes containing the reference axis into slices in planes perpendicular to the reference axis. This means likewise may comprise elements of the digital computer which computes the planar integrals.

Finally, the apparatus includes means for distributing the images organized as slices among the 2D CT reconstruction processors such that the 2D CT reconstruction processors calculate a 2D image of the object for each of the slices, whereby the 2D images for the slices together represent the 3D image of the object. The 2D CT reconstruction processors each operate on a subset of the total number of slices. This further means for distributing likewise can comprise elements of the same processor employed for computing the planar integrals.

As will be further apparent from the detailed description hereinbelow, the invention provides a number of advantages. As one advantage, the number of computations for the 3D Radon inversion is reduced to the order of $N^4$, from the order of $N^5$ for conventional 3D Radon inversion. Parallel processing and partitioning are inherent. Thus, data and images may be partitioned and processed separately. As a result, reconstructions can be sped up by factors of tens, hundreds, or even thousands through parallel architecture and processing requiring only small processors. The capability of data reduction is inherent. As a result, regions of an image can be selectively processed or discarded, thereby eliminating unwanted data and processing. By the invention, image reconstruction is achieved in stages, using well-developed existing two-dimensional CT filtered backprojection procedures. As a result, implementation of the invention does not require the development of new 3D backprojection and filtering procedures and hardware.

## Brief Description of the Drawings

While the novel features of the invention are set forth with particularity in the appended claims, the invention, both as to organization and content, will be better understood and appreciated from the following detailed description taken in conjunction with the drawings, in which:

FIG. 1 depicts conventional cone beam scanning geometry for 3D CT;

FIGS. 2a, 2b, 2c, 2d, 2e and 2f are diagrams depicting the Radon transform approach to 3D CT imaging;

FIG. 3 is a representation of the 3D Radon transform of an object at a given point;

FIG. 4 depicts reconstruction of the 2D projection image on each of a plurality of coaxial vertical planes;

FIG. 5 is a representation of a 2D projection image of a 3D object on a single vertical plane;

FIG. 6 depicts reconstruction of the object slice-by-slice on each horizontal plane;

FIG. 7 depicts projection of a horizontal slice of the object on a vertical plane;

FIG. 8 depicts generation of the projection data on a horizontal slice; and

FIG. 9 is a block diagram of apparatus in accordance with the invention.

## Detailed Description

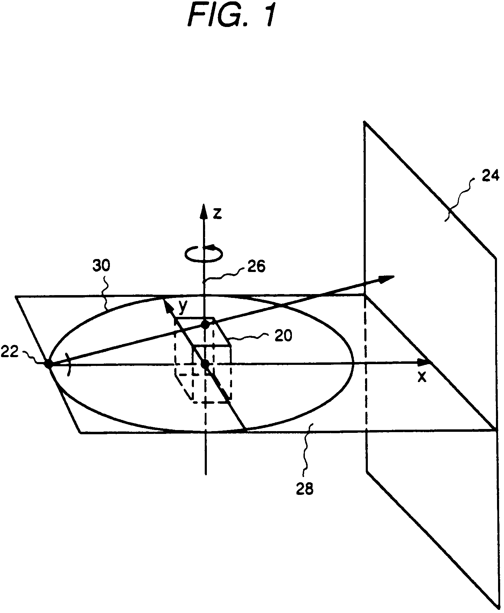

A typical scanning and data acquisition configuration employing cone-beam geometry is depicted in FIG. 1. An object 20 is positioned within a field of view between a cone beam x-ray point source 22 and a 2D detector array 24, which provides cone beam projection data. An axis of rotation 26 passes through the field of view and object 20. For purposes of analysis, a midplane 28 is defined which contains the x-ray point source 22 and is perpendicular to the axis of rotation 26. By convention, the axis of rotation 26 is referred to as the z-axis, and the intersection of the axis of rotation 26 and the midplane 28 is taken as the origin of coordinates. $x$ and $y$ axes lie in the midplane 28 as indicated. For scanning the object 20 at a plurality of angular positions, the source 22 moves relative to the object 20 and the field of view along a circular scanning trajectory 30 lying in the midplane 28, while the detector 24 remains fixed with respect to the source 22.

Thus, in the configuration of FIG. 1, data are acquired at a number of angular positions around the object by scanning the source and detector along the single circular scanning trajectory 30 (or equivalently rotating the object while the source and detector remain stationary).

As noted above, most image reconstruction procedures in x-ray CT are based on the Radon inversion process, in which the image of an object is reconstructed from the totality of the Radon transform of the object.

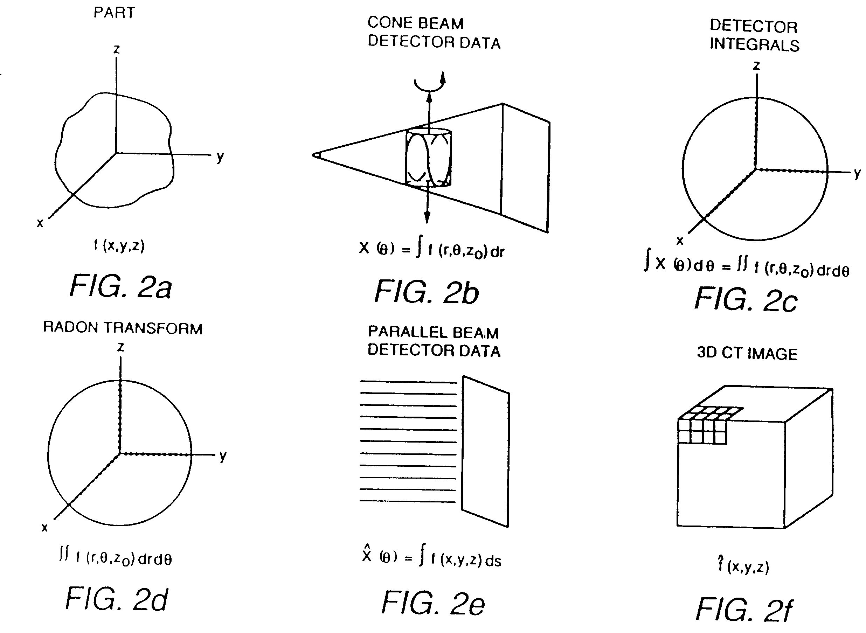

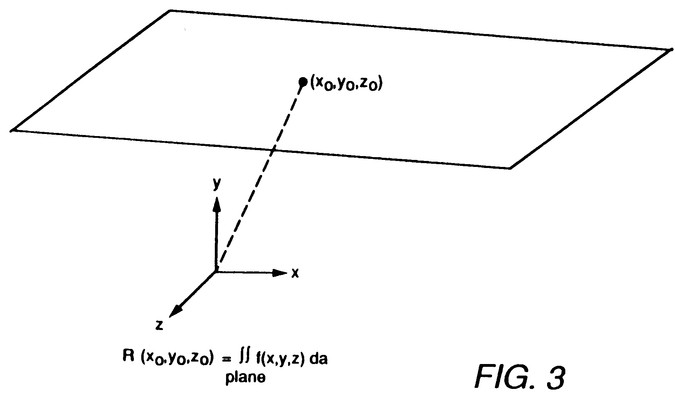

FIGS. 2a through 2f and FIG. 3 depict in general the Radon transform approach to 3D imaging.

Specifically, the object itself is defined in terms of its x-ray attenuation coefficient $f(x,y,z)$ (FIG. 2a). The measured cone beam projection data then corresponds to a line integral of this function over the radial direction $X(\theta)= \int f(r,\theta,z_0)dr$ (FIG. 2b). The line integrals of the detector data (also known as detector integrals) are given by $\int X(\theta)d\theta = \int\int f(r,\theta,z_0)dr\ d\theta$ (FIG. 2C). In the parallel beam case, these detector integrals are simply equal to the Radon transform of the object. In the cone beam case, however, the Radon transform is given instead by $\int\int f(r,\theta,z_0)r\ dr\ d\theta$ (FIG. 2d). The additional factor of r in the Radon transform integral results from the Jacobian of the coordinate transformation from Cartesian to polar coordinates. As depicted in FIGS. 2e and 2f, an inverse Radon transform procedure reconstructs a 3D CT image from the detector integrals. Since direct inverse Radon transformation requires planar integrals of the object as input, a preliminary step of converting cone beam detector integrals to planar integrals may be employed.

As depicted in FIG. 3, the 3D Radon transform of an object at a point $x_0, y_0, z_0$ is given by the area integral of the x-ray attenuation coefficient over the plane passing through $x_0, y_0, z_0$ that is perpendicular to the line from the origin to $x_0, y_0, z_0$, and can be expressed as

$$R(x_o, y_o, z_o) = \iint_{plane} f(x,y,z)da \qquad (1)$$

For a 2D radon transform, the situation is similar, except that the integral is over a line, not over a plane.

The planar integral can also be expressed as

$$R(s, \hat{n}) = \int d^3 r \delta(s - \underline{r} \cdot \hat{n}) f(\underline{r}) \qquad (2)$$

where $\hat{n} = (sin\theta cos\phi, sin\theta sin\theta, cos\phi)$ is a direction vector characterizing the normal to the plane; s is the distance of the plane from the origin; and $f(\underline{r})$ is the 3D object.

In words, $R(s, \hat{n})$ represents the integrated density of the object on the plane whose normal is $\hat{n}$ and which is at a distance s from the origin. The planar integral $R(s, \hat{n})$ is also referred to as Radon data.

The inverse Radon transformation by which a 3D object $f(\underline{r})$ can be reconstructed from its planar integrals R can be expressed as

$$f(\underline{r}) = \frac{-1}{8\pi^2} \iiint d\phi d(\cos\theta)ds \frac{\partial^2}{\partial s^2} R(s, \hat{n})\delta(s - \underline{r} \cdot \hat{n}) \qquad (3)$$

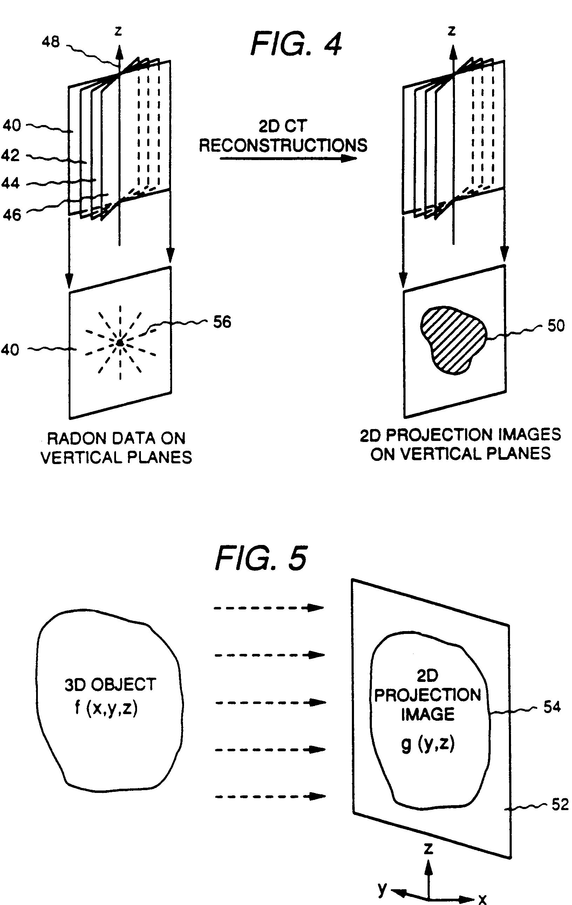

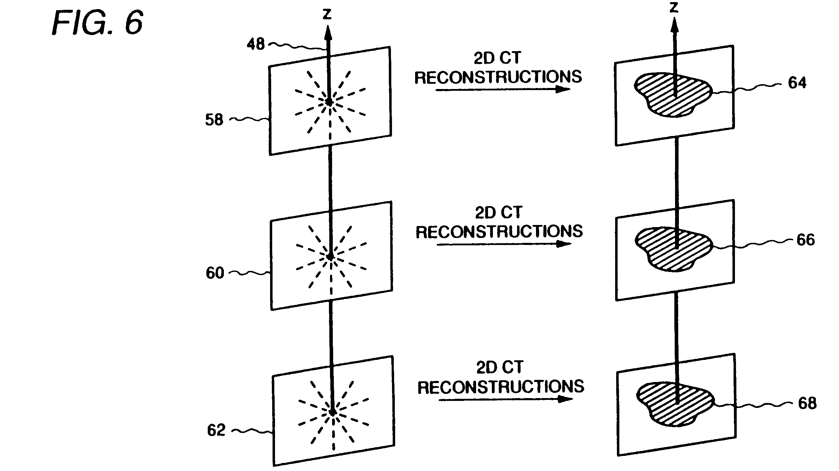

In accordance with an important aspect of the invention, the inverse Radon transformation expressed in Equation (3) is achieved through a two-step process. Step 1 comprises 2D CT image reconstructions on a number of vertical planes containing the z axis, described hereinbelow with reference to FIG. 4. Step 2 comprises 2D CT image reconstructions on a number of horizontal planes, described hereinbelow with reference to FIG. 6.

More particularly, as a preliminary step. planar integrals (or at least values representing planar integrals) are determined and organized on a plurality of planes containing a reference axis in Radon space, for example, on vertical planes 40, 42, 44 and 46 containing a vertical reference axis 48 as depicted in FIG. 4. In the case of MRI imaging, or in the parallel beam case of FIG. 2e, such planar integrals are available directly from detected signals. In the case of x-ray cone beam projection data, the planar integrals are computed from the cone beam projection data. As shown by Minerbo (1979, above), the data $p(s, \hat{a})$, which represent the planar integrals of the object $f(x,y,z)$ on planes perpendicular to the direction $\hat{a}$, can be obtained from the cone beam scan data. The procedure comprises integrating the detector readings over straight lines on the detector plane. If the x-ray source moves in two perpendicular circles, then the data set $p(s, \hat{a})$ is complete, i.e. there is no missing data.

A preferred procedure however for determining the planar integrals is disclosed in the above-incorporated application Serial No.           [Docket RD-20039]. It may be noted that the procedure of application Serial No.         [RD-20039] actually determines the radial derivative of each datum in Radon space, thus referred to herein as values at least representing planar integrals. While actual Radon data can be obtained by integrating in the radial dimension, such integration would be an unnecessary step because the 2D CT reconstruction processors described herein-below can operate directly on the radial derivatives of the Radon data.

As a first subsequent step (Step 1), also depicted in FIG. 4, a 2D CT reconstruction procedure, such as but not limited to filtered backprojection, is employed to calculate a 2D projection image of the object, such as image 50, on each of the planes containing the reference axis 48, that is on each of the vertical planes such as the planes 40, 42, 44 and 46. The basis and significance of Step 1 are exampled as follows:

Consider any plane in the three-dimensional Radon space containing the origin. Without loss of generality let this plane be the *y-z* plane, represented in FIG. 5 as plane 52. Any data point on this plane is given by

$$R(s, \hat{a}_{yz}) = \int_{-\infty}^{\infty} \int_{-\infty}^{\infty} f(s\hat{a}_{yz} + t\hat{a}_{yz}^{\perp} + x\hat{x}) dt dx$$
$$= \int_{-\infty}^{\infty} g(s\hat{a}_{yz} + t\hat{a}_{yz}^{\perp}) dt \qquad (4)$$

where $\hat{a}_{yz}$, is a unit vector on the *y-z* plane, $\hat{a}_{yz}^{\perp}$, is a unit vector on the *y-z* plane orthogonal to $\hat{a}_{yz}$, and the function *g* is given by

$$g(s\hat{a}_{yz} + t\hat{a}_{yz}^{\perp}) = \int_{-\infty}^{\infty} f(s\hat{a}_{yz} + t\hat{a}_{yz}^{\perp} + x\hat{x}) dx \qquad (5)$$

Since both $\hat{a}_{yz}$, and $\hat{a}_{yz}^{\perp}$, are unit vectors on the *y-z* plane, $s\hat{a}_{yz} + t\hat{a}_{yz}^{\perp} = y\hat{y} + z\hat{z}$ is a vector on the *y-z* plane. Therefore Equation (5) can be written in the form:

$$g(y, z) = \int f(x, y, z) dx \qquad (6)$$

Equation (6) shows that the function *g(y,z)* is the two-dimensional projection image 54 of the function *f(x,y,z)* on the *y-z* plane 52, as illustrated in FIG. 5. Equation (4) shows that the datum $R(s, \hat{a}_{yz})$ can be considered as the line integral of the projection image *g(y,z)* through the point $s\hat{a}_{yz}$ in the direction $\hat{a}_{yz}^{\perp}$ perpendicular to $\hat{a}_{yz}$. In other words, the subset $R(s, \hat{a}_{yz})$ of the data set $R(s, \hat{a})$ lying on the *y-z* plane can be treated as the parallel beam projection data of the projection image *g(y,z)*. Therefore the projection image *g(y,z)* on the *y-z* plane can be reconstructed from the subset $R(s, \hat{a}_{yz})$ on that plane. Since the *y-z* plane in this analysis is arbitrary, in general the two-dimensional projection image of *f(x,y,z)* on any plane containing the origin can be reconstructed from the subset of the data $R(s, \hat{a})$ lying on the same plane.

Referring again to FIG. 4, the entire data set $R(s, \hat{a})$ can be partitioned by the vertical planes containing the z-axis or reference axis 48. Using the above analysis the two-dimensional projection image of *f(x,y,z)* on each of these vertical planes can be reconstructed from the data set on that plane.

As may be seen in FIG. 4, the Radon data on each of the vertical planes, such as data points 56 on representative plane 40, preferably reside on polar coordinate grids. This facilitates CT image reconstruction without requiring an interpolation step.

As a second subsequent step (Step 2), depicted in FIG. 6, slices are defined in planes perpendicular to the reference axis 48, that is on horizontal planes such as planes 58, 60 and 62, and a 2D CT reconstruction procedure, such as but not limited to filtered backprojection, is employed to calculate a 2D image of the object for each of the slices, operating on the values of the 2D projection images in the plane of the slice, such as images 64, 66 and 68. The slice images 64, 66 and 68 taken together comprise a slice-by-slice 3D image. The basis for Step 2 is explained as follows:

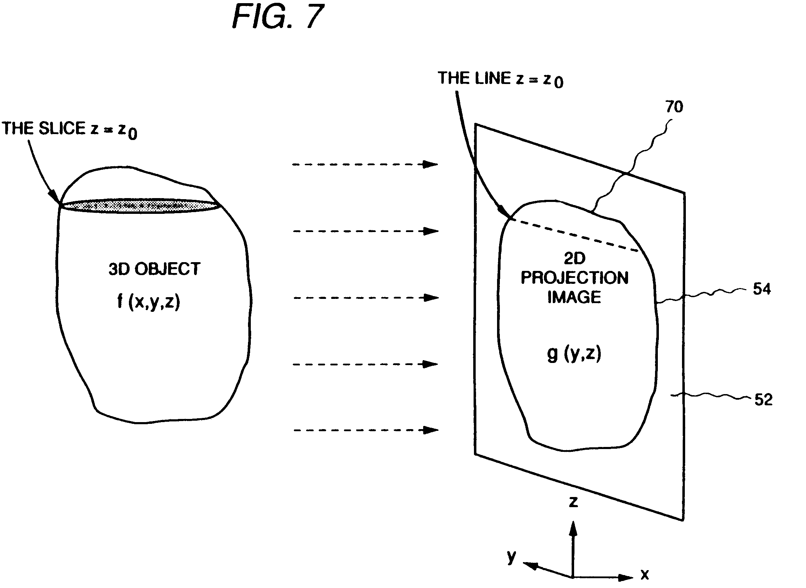

Take any one of the two-dimensional projection images reconstructed on vertical planes. Again without loss of generality take the projection image *g(y,z)* on the *y-z* plane 52, represented as image 54 in FIG. 5 and FIG. 7. Consider the portion of the image *g(y,z)* on the line $z = z_0$, depicted in FIG. 7 as a line 70. Since *g(y,z)* is the image of *f(x,y,z)* projected in the x direction on the *y-z* plane, the portion of *g(y,z)* on the line $z = z_0$ is the image of the slice of the object on the horizontal plane at the height $z_0$ projected in the x direction. Extending the argument to other vertical planes, the portion of the two-dimensional projection image on each vertical plane represents the projection of the slice of the object on the horizontal plane at constant height $z_0$ in the direction perpendicular to that plane.

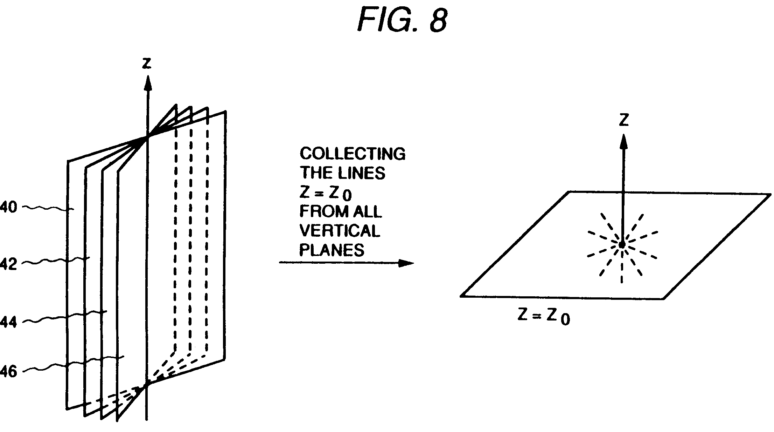

Now the plane $z = z_0$ contains the line $z = z_0$ of all the two-dimensional projection images on vertical planes, as illustrated in FIG. 8, and therefore it contains the projections of the slice of the object at height $z_0$ in all directions. This slice of the object can therefore be reconstructed from the values of the two-dimensional projection images on the plane $z = z_0$. In this manner the entire three-dimensional object is reconstructed, slice-by-slice, at the various *z* levels, as illustrated in FIG. 6, referred to above as illustrating Step 2.

As will be apparent from FIG. 8 in particular, because images on each of the horizontal planes are formed by the intersection of a horizontal plane with a set of coaxial vertical planes, the images reside on polar coordinate grids. Again, this facilitates CT image reconstruction without requiring an interpolation step.

It is significant that the invention in effect performs a 3D Radon version using 2D Radon inversion procedures. Accordingly, conventional 2D CT reconstruction processors may be employed. For example, the STAR processor, used in GE CT scanners, can be employed, which is a specialized array processor for doing filtered backprojection to reconstruct two-dimensional images. Moreover, computation efficiency is increased. As noted hereinabove, the number of computations in 2D CT image reconstruction is of the order $N^3$. Therefore the 2D image reconstruction on planes, either vertical or horizontal, requires a number of computations of the order $N \times N^3 = N^4$. Because both steps in accordance with the present invention involve 2D image reconstructions on $N$ planes, the number of computations is still of the order $N^4$. In contrast, the computations required in the conventional 3D Radon inversion are of the order $N^5$.

It is also significant that parallel processing and partition are inherent in the method of the invention, and are achieved without penalty in the form of increases in system memory requirements.

Thus, suppose there are $M$ parallel processors available, and the image reconstruction involves $N$ vertical planes and $N$ horizontal planes, then each processor is assigned to handle the reconstruction on approximately $n \approx N / M$ planes in each step. As noted above, these processors may comprise specialized array processors for doing filtered backprojection to reconstruct two-dimensional images, such as the STAR processor used in the GE CT scanners.

Moreover, in accordance with the invention, the 3D reconstruction of the object is inherently "partitioned" into 2D image reconstruction on a set of planes (vertical planes in Step 1 and horizontal planes in Step 2) which together form the 3D reconstruction volume. The planes do not overlap (except for the $z$ axis, which is common to all the vertical planes in Step 1, but which is a very small region compared with each vertical plane), so there is basically no overlap in the reconstruction volume in each processor, no overlap in the data each processor operates on, and no overlap in the image reconstructed in each processor. Consequently, each processor can operate independently, without particular concern with respect to such considerations as sharing data, synchronization, and the like. Accordingly, the parallel architecture can be very straightforward. Also, since basically there is no overlap in the reconstruction volume in each processor, there is no increase in the total system memory in going to parallel processing. In other words, the parallel processing is achieved without penalty in the form of increases in system memory requirement. This is in sharp contrast to other parallel processing architectures in x-ray CT where large amounts of memory are required in each processor.

As a specific example of a parallel processing architecture where large amounts of memory are required in each processor, since CT image reconstruction as carried out in filtered backprojection is a superimposition process, it is intrinsically parallel. One perhaps obvious way of parallelizing the process would be to divide the projection data among a number of processors, each of them filtering and backprojecting its own set of projection data. But since the backprojection of projection data at each view angle always covers the entire reconstruction region, a memory size equal to the entire reconstruction region is required in each processor. In contrast, the present invention avoids this memory requirements.

The invention is also applicable to efficient flaw detection and analysis, particularly in the inspection of manufactured parts. As noted hereinabove with reference to FIGs. 4 and 5, the image reconstructed on the vertical planes in Step 1 of the reconstruction procedure is the projection of the three-dimensional object on the vertical plane. In other words, it is what is usually referred to as the Digital Fluoroscopy (DF) or Digital Radiography (DR) image. These DF or DR images obtained in Step 1 given rise to the possibility of further reduction in image reconstruction time. This is done as follows:

(1) Choose a small number, say two to five, of the DF images so reconstructed.
(2) Perform image processing on these DF images to locate regions of interest, such as the presence of laws, cracks, etc.
(3) Carry out the image reconstructions in step 2 only on the horizontal slices spanning the region of interest.

For example, suppose one is interested in detecting and characterizing a cavity inside an object. If the height of this cavity is a small fraction of the total height of the object, the number of horizontal slices spanning the cavity is also a small fraction of the total number of horizontal slices spanning the entire object. Thus the above procedure brings about a tremendous saving in image reconstruction time.

In each parallel processor the slice of the object on a horizontal plane is reconstructed from the input line integrals on the same plane. Again, the processors work in parallel.

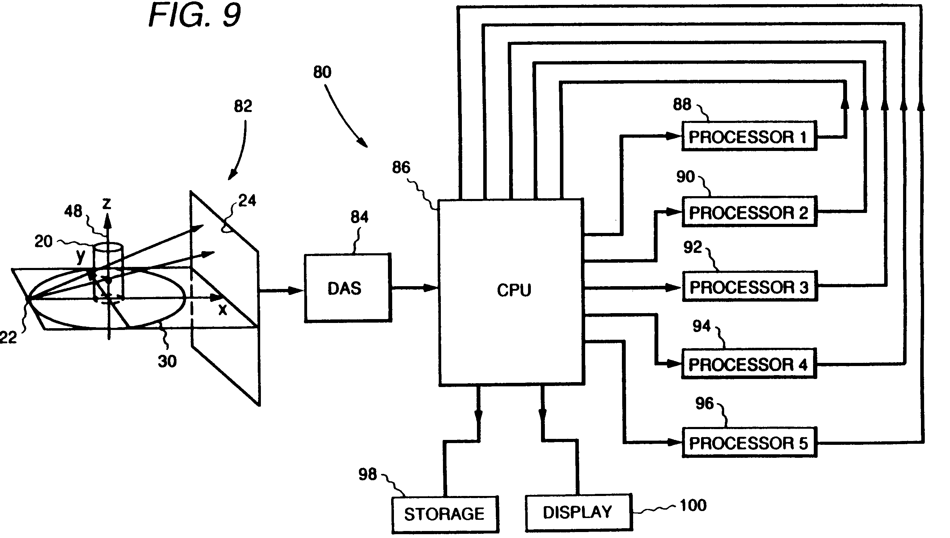

FIG. 9 depicts parallel processing apparatus, generally designated 80, embodying the invention; a typical scanning configuration, generally designated 82, employing cone beam geometry as described hereinabove with reference to FIG. 1; and a data acquisition system 84 connected to the scanning configuration 82.

In the FIG. 9 scanning configuration 82, as in FIG. 1, the object 20 is positioned within a field of view between the cone beam x-ray point source 22 and a 2D detector array 24, which provides cone beam projection data. During operation, x-ray photons that penetrate the object are detected by x-ray detector array 24 and registered by the data acquisition system (DAS) 84. The photon counts, after being normalized by the air signals and converted to the negative of the logarithms, represent the line integrals through the object.

Thus, in the FIG. 9 scanning configuration 82, data are acquired at a number of angular positions around the object 20 by scanning the source 22 and detector 24 along the single circular scanning trajectory 30 (or equivalently rotating the object 20 while the source 22 and detector 24 remain stationary). It may be noted, however, that the data set collected in such a single scan is incomplete, and artifacts may accordingly be introduced into the reconstruction, which may or may not be acceptable, depending on the particular application.

Smith (1985, above) has shown that a cone beam data set is complete if there is a point from the x-ray source scanning trajectory on each plane passing through the object of interest (with the assumptions that the detector is locked in position relative to the source and large enough to span the object under inspection). A configuration suggested by Minerbo (1979, above) and Tuy (1983, above), which Smith points out satisfies his condition for data completeness, is to employ two circular source scanning trajectories which are perpendicular to each other. Another scanning configuration which achieves data completeness is disclosed in commonly-assigned U.S. Patent application Serial No. 07/572,651, PCT/US/                    (RD 19895), filed August 27, 1990, by Eberhard et al. and entitled "SQUARE WAVE CONE BEAM SCANNING TRAJECTORY FOR DATA COMPLETENESS IN THREE-DIMENSIONAL COMPUTERIZED TOMOGRAPHY".

Alternatively, instead of acquiring a complete cone beam x-ray data set, the invention of the above-incorporated application Serial No.                    [ RD-19695] may be employed in combination with the subject invention, using optically-acquired object boundary information to iteratively correct the 2D projection images resulting from Step 1 of the subject invention before proceeding with Step 2.

Referring again to FIG. 9, the parallel processing apparatus 80 more particularly comprises a computer represented as CPU 86; a plurality of dedicated 2D CT reconstruction processors represented by processors 88, 90, 92, 94 and 96 which operate in parallel; a representative storage device 98 comprising mass storage and RAM, for example; and a suitable output device represented as a display 100. The 2D CT reconstruction processors 88, 90, 92, 94 and 96 preferably comprise specialized array processors for doing filtered backprojection to reconstruct two-dimensional images, such as the STAR processor used in the General Electric CT scanners. The CPU 86 is connected to receive line integrals representing the object from the data acquisition system 84; to distribute data among and to receive data from the reconstruction processors 88, 90, 92, 94 and 96; to utilize the storage device 98; and to provide output to the display 100.

The CPU 86 is preliminarily operable to compute and sort the planar integrals of the object on to a predetermined set of vertical planes containing the $z$ or reference axis 48 in Radon space from the input line integrals. As noted above, the planar integrals may be computed by integrating across all possible straight lines on the detector 24.

Preferably the procedure of the above-incorporated application Serial No.                    [RD-20039] is employed.

The CPU 86 is then operable to distribute the planar integrals on the various vertical planes among the 2D CT reconstruction processors such as the processors 88, 90, 92, 94 and 96, assigned to handle the corresponding planes. In each reconstruction processor the two-dimensional image of the object projected on a vertical plane is reconstructed from the input planar integrals on the same plane. These processors work in parallel and independently to achieve a significant reduction in processing time, and each handles only a small portion of the data to generate a two-dimensional image.

The two dimensional projection images are then fed back to the CPU 86, which functions to organize the projection images into a number of horizontal planes or slices of interest. The image on each horizontal plane represents the line integrals of the slice of the object on the same plane in all directions. Also, because the images on these horizontal planes are formed by the intersection of a horizontal plane with a set of coaxial vertical planes, these images reside on polar grids (FIGS. 6 and 8) and hence can be input directly for CT image reconstruction without going through interpolation.

Next, the CPU 86 is operable to distribute these images organized as slices on horizontal planes again among the 2D CT reconstruction processor, such as the processors 88, 90, 92, 94 and 96, assigned to handle corresponding planes. In each reconstruction processor the slice of the object on a horizontal plane is reconstructed from the input line integrals on the same plane. Again, the processors work in parallel. The resultant 2D images of the slices together represent the 3D image of the object. As a practical matter, the reconstructed images of the slices are fed back to the CPU 86, where by are put on mass storage and displayed.

While specific embodiments of the invention have been illustrated and described herein, it is realized that modifications and changes will occur to those skilled in the art. It is therefore to be understood that the appended claims are intended to cover all such modifications and changes as fall within the true spirit and scope of the invention.

**Claims**

1. A method for reconstructing a 3D image of an object from cone beam projection data, said method comprising:

   determining values at least representing planar integrals on a plurality of planes containing a reference axis in Radon space from the cone beam projection data;

   on each of the planes containing the reference axis, employing 2D CT reconstruction procedure to calculate from the values representing planar integrals a 2D projection image of the object on the particular plane; and

   defining slices in planes perpendicular to the reference axis and reconstructing the 3D image of the object slice-by-slice by employing for each slice a 2D CT reconstruction procedure on the values of the 2D projection images in the plane of the slice to calculate a 2D image of the object for each of the slices.

2. A method in accordance with Claim 1, wherein the 2D CT reconstruction procedure employed to calculate a 2D projection image of the object on the particular plane comprises filtered backprojection.

3. A method in accordance with Claim 1, wherein the 2D CT reconstruction procedure employed to reconstruct each slice comprises filtered backprojection.

4. A method in accordance with Claim 1, which comprises employing a plurality of 2D CT reconstruction processors operating in parallel to calculate the 2D projection images of the object, each of the 2D CT reconstruction processors operating on a subset of the total number of planes.

5. A method in accordance with Claim 4, which comprises employing filtered backprojection processors as the 2D CT reconstruction processors.

6. A method in accordance with Claim 1, which comprises employing a plurality of 2D CT reconstruction processors operating in parallel to calculate the 2D image of the object for each of the slices.

7. A method in accordance with Claim 6, which comprises employing filtered backprojection processors as the 2D CT reconstruction processors.

8. A method for reconstructing a 3D image of an object from planar integrals determined from detected signals resulting from an imaging agent, said method comprising:

   organizing the planar integrals in a plurality of planes containing a reference axis;

   on each of the planes containing the reference axis, employing 2D CT reconstruction procedure to calculate a 2D projection image of the object on the particular plane; and

   defining slices in planes perpendicular to the reference axis and reconstructing the 3D image of the object slice-by-slice by employing for each slice a 2D CT reconstruction procedure on the values of the 2D projection images in the plane of the slice to calculate a 2D image of the object for each of the slices.

9. A method in accordance with Claim 8, wherein the 2D CT reconstruction procedure employed to calculate a 2D projection image of the object on the particular plane comprises filtered backprojection.

10. A method in accordance with Claim 8, wherein the 2D CT reconstruction procedure employed to reconstruct each slice comprises filtered backprojection.

11. A method in accordance with Claim 8, which comprises employing a plurality of 2D CT reconstruction processors operating in parallel to calculate the 2D projection image of the object, each of the 2D CT reconstruction processors operating on a subset of the total number of planes.

12. A method in accordance with Claim 11, which comprises employing filtered backprojection processors as the 2D CT reconstruction processors.

**13.** A method in accordance with Claim 8, which comprises employing a plurality of 2D CT reconstruction processors operating in parallel to calculate the 2D image of the object for each of the slices.

**14.** A method in accordance with Claim 13, which comprises employing filtered backprojection processors as the 2D CT reconstruction processors.

**15.** A method for identifying a region of interest within an object and reconstructing a 3D image of a portion of the object including the region of interest from cone beam projection data, said method comprising:

determining values at least representing planar integrals on a plurality of planes containing a reference axis in Radon space from the cone beam projection data;

on each of the planes containing the reference axis, employing 2D CT reconstruction procedure to calculate from the values representing planar integrals a 2D projection image of the object on the particular plane;

performing image processing on a subset of the 2D projection images to identify any regions of interest; and

defining slices in planes perpendicular to the reference axis and employing, for each slice spanning any identified regions of interest, a 2D CT reconstruction procedure on the values of the 2D projection images in the plane of the slice.

**16.** A method in accordance with Claim 15, wherein the regions of interest comprise flaws in the object.

**17.** A method in accordance with Claim 15, which comprises employing a plurality of 2D CT reconstruction processors operating in parallel to calculate the 2D projection images of the object, each of the 2D CT reconstruction processors operating on a subset of the total number of planes.

**18.** A method in accordance with Claim 17, which comprises employing filtered backprojection processors as the 2D CT reconstruction processors.

**19.** A method in accordance with Claim 15, which comprises employing a plurality of 2D CT reconstruction processors operating in parallel to calculate the 2D image of the object for each of the slices.

**20.** A method in accordance with Claim 19, which comprises employing filtered backprojection processors as the 2D CT reconstruction processors.

**21.** Parallel processing apparatus for reconstructing a 3D image of an object from cone beam projection data, said apparatus comprising:

a plurality of 2D CT reconstruction processors;

means for computing values at least representing planar integrals on a plurality of planes containing a reference axis in Radon space from the come beam projection data;

means for distributing the values representing planar integrals on the plurality of planes among said 2D CT reconstruction processors such that said 2D CT reconstruction processors calculate a 2D projection image of the object on each of the planes, each of said 2D CT reconstruction processors operating on a subset of the total number of planes;

means for organizing the 2D projection images on each of the planes containing the reference axis into slices in planes perpendicular to the reference axis; and

further means for distributing the images organized as slices among said 2D CT reconstruction processors such that said 2D CT reconstruction processors calculate a 2D image of the object for each of the slices, each of said 2D CT reconstruction processors operating on a subset of the total number of slices;

whereby the 2D images for the slices together represent the 3D image of the object.

**22.** Apparatus in accordance with Claim 21, wherein said 2D CT reconstruction processors comprise filtered backprojection processors.

# FIG. 1

PART

$f(x,y,z)$

FIG. 2a

CONE BEAM
DETECTOR DATA

$X(\theta) = \int f(r,\theta,z_0)\,dr$

FIG. 2b

DETECTOR
INTEGRALS

$\int X(\theta)\,d\theta = \iint f(r,\theta,z_0)\,dr\,d\theta$

FIG. 2c

RADON TRANSFORM

$\iint f(r,\theta,z_0)\,dr\,d\theta$

FIG. 2d

PARALLEL BEAM
DETECTOR DATA

$\hat{X}(\theta) = \int f(x,y,z)\,ds$

FIG. 2e

3D CT IMAGE

$\hat{f}(x,y,z)$

FIG. 2f

EP 0 492 897 A2

$(x_0, y_0, z_0)$

$R(x_0, y_0, z_0) = \iint\limits_{plane} f(x,y,z)\, da$

FIG. 3

# FIG. 4

2D CT
RECONSTRUCTIONS

RADON DATA ON
VERTICAL PLANES

2D PROJECTION IMAGES
ON VERTICAL PLANES

# FIG. 5

3D OBJECT
$f(x,y,z)$

2D
PROJECTION
IMAGE
$g(y,z)$

FIG. 6

FIG. 7

EP 0 492 897 A2

THE SLICE z = $z_0$

THE LINE z = $z_0$

70

3D OBJECT

f (x,y,z)

2D
PROJECTION
IMAGE

g (y,z)

54

52

z

y

x

EP 0 492 897 A2

# FIG. 8

40

42

44

46

COLLECTING
THE LINES
$Z = Z_0$
FROM ALL
VERTICAL
PLANES

$Z = Z_0$

FIG. 9

EP 0 492 897 A2